# EUROPÄISCHE PATENTSCHRIFT

(11) **EP 1 415 789 B1**
(45) Veröffentlichungstag und Bekanntmachung des Hinweises auf die Patenterteilung: **07.12.2005**
(21) Anmeldenummer: 03011775.8
(22) Anmeldetag: 24.05.2003
(51) Int. Cl.: B29C 65/72, B29C 65/10, B29C 65/14

(54) **Verfahren und Vorrichtung zum Schweissen von Kunststoffteilen, insbesondere zum Verbinden von Kunststoffteilen entlang einer Schweisslinie**
Method and device for welding plastic parts, in particular for connecting plastic parts along a weld line
Procédé et appareil pour souder des pièces en matière plastique, en particulier pour connecter des pièces en matière plastique le long d'une ligne de soudure

(30) Priorität: 31.10.2002 DE 10250751
(43) Veröffentlichungstag der Anmeldung: 06.05.2004
(73) Patentinhaber: KVT Bielefeld GmbH, 33609 Bielefeld (DE)
(72) Erfinder: Schulz, Hans Georg, 33609 Bielefeld (DE)
(74) Vertreter: TER MEER - STEINMEISTER & PARTNER GbR

(56) Entgegenhaltungen:
- EP-A- 0 389 147
- DE-A- 10 019 163
- DE-A- 10 019 300
- GB-A- 1 570 377
- US-A- 3 331 293
- US-A- 4 450 038
- US-A- 6 149 762
- PATENT ABSTRACTS OF JAPAN Bd. 0135, Nr. 55 (M-904), 11. Dezember 1989 (1989-12-11) & JP 1 229616 A (KOBAYASHI KOGYO KK), 13. September 1989 (1989-09-13) -& JP 01 229616 A (KOBAYASHI KOGYO KK) 13. September 1989 (1989-09-13)
- PATENT ABSTRACTS OF JAPAN Bd. 1997, Nr. 08, 29. August 1997 (1997-08-29) & JP 9 109262 A (SEIDENSHA DENSHI KOGYO KK), 28. April 1997 (1997-04-28) -& JP 09 109262 A (SEIDENSHA DENSHI KOGYO KK) 28. April 1997 (1997-04-28)
- PATENT ABSTRACTS OF JAPAN Bd. 2000, Nr. 16, 8. Mai 2001 (2001-05-08) & JP 2001 026056 A (SUZUKI MOTOR CORP), 30. Januar 2001 (2001-01-30) -& JP 2001 026056 A (SUZUKI MOTOR CORP) 30. Januar 2001 (2001-01-30)

## Beschreibung

Die Erfindung betrifft ein Verfahren zum Schweißen von Kunststoffteilen, insbesondere zum Verbinden von Kunststosteilen entlang einer Schweißlinie gemäß dem Oberbegriff des Anspruchs 1. Die Erfindung betrifft ferner eine Vorrichtung zum Schweißen von Kunststoffteilen mit einem erhitzten, Strahlungswärme abgebenden Schweißkörper, gemäß dem Oberbegriff des ersten Vorrichtungsanspruchs.

Dünnwandige Hohlkörper aus Kunststoff, beispielsweise Polyamid, können unter anderem dadurch hergestellt werden, daß zwei Hälften entlang ihren dünnwandigen Rändern miteinander zu einem geschlossenen Hohlkörper verbunden werden. Diese Verbindung kann durch Schweißen erfolgen.

Thermoplastische Kunststoffe gelangen durch Erwärmung in einen teigigen Zustand, in dem zwei Werkstückteile durch Zusammendrücken miteinander verschweißt werden können. Die zum Aufbringen der erforderlichen Wärme auf die Werkstückteile bisher bekannten Verfahren besitzen überwiegend eine Reihe von Nachteilen.

Bei einem bekannten Verfahren, bei dem Heißluft mit Hilfe von Röhren auf den Schweißbereich gelenkt wird, läßt sich die Temperatur nur schlecht regeln. Es bereitet daher Schwierigkeiten, den bei vielen Kunststoffen für die Verarbeitung einzuhaltenden engen Temperaturbereich zu treffen. Bei einer Überhitzung kann es zum thermischen Abbau des Kunststoffs kommen. Auch die örtliche Begrenzung der Wärmeübertragung ist schwierig, so daß mit einer Verformung oder sogar Zerstörung der Umgebung des eigentlichen Schweißbereichs gerechnet werden muß. Andererseits führt eine zu geringe Erwärmung zu einer unzureichenden Festigkeit der Verbindung und zu unangemessen langen Zykluszeiten.

Bei einem anderen Verfahren wird ein Schweißstempel zur Übertragung von Kontaktwärme an das Werkstück angelegt. Da Schweißstempel zur Vermeidung einer Überhitzung im wesentlichen nur auf die Schweißtemperatur erwärmt werden kann, arbeitet auch dieses Verfahren relativ langsam. Es besteht auch die Gefahr, daß der Kunststoff an dem Schweißstempel anheftet und daß beim Abziehen des Stempels Fäden gezogen werden. Es besteht zwar die Möglichkeit, eine Antihaftbeschichtung auf dem Schweißstempel anzubringen, jedoch erfordert dies zusätzlichen Aufwand, der oft nicht vertretbar ist. Eine Antihaftbeschichtung dieser Art, etwa in der Form eines Überzugs aus "Teflon" (Polytetraflourethylen), verschleißt verhältnismäßig rasch. Bereits verhältnismäßig geringe Beschädigungen der Beschichtung, die sich frühzeitig einstellen können, führen zu Überproduktion von Ausschuß.

Bekannt ist auch ein Verfahren, bei dem Kontaktwärme mit einem Schweißstempel übertragen wird, der sich auf einer wesentlichen höheren Temperatur als der Schmelztemperatur des Kunststoffs befindet. Hier tritt die Erwärmung relativ rasch ein und es besteht nicht die Gefahr des Fadenziehens. Es kommt jedoch zu Materialverlusten am Kunststoffteil durch Verdampfen oder Verbrennen. Dadurch entstehen Gase, die unter Umständen toxisch sein können und daher aus Gründen des Arbeits- und Umweltschutzes nicht akzeptiert werden können. Zugleich können Oxidationsverfärbungen durch thermischen Abbau des Kunststoffs entstehen. Dieses Verfahren ist daher nur in Ausnahmefällen und nur bei bestimmten Kunststoffen anwendbar.

Schließlich ist es auch bekannt, die Erwärmung durch Übertragung von Wärmestrahlung von einem erhitzten, jedoch nicht mit dem Werkstück in Berührung tretenden Schweißstempel oder Schweißkörper vorzunehmen. Das Schweißwerkzeug muß dabei auf eine relativ hohe Temperatur erwärmt werden. Der wesentliche Nachteil dieses Verfahrens besteht darin, daß es lange Zykluszeiten erfordert.

Bekannt ist es schließlich auch (DE 100 19 300 A1), die Erwärmung der Schweißlinien durch gleichzeitiges Aufbringen einer Strahlungswärme und eines heißen Gases zu bewirken. Dieses Verfahren hat deutliche Vorteile. Insbesondere wird durch den Heißgasstrom für eine gute Wärmeverteilung gesorgt und werden örtliche Überhitzungen vermieden. Der relativ geringe Gasstrom läßt sich relativ gut auf die eigentliche Schweißposition begrenzen, so daß Beschädigungen der Peripherie der Schweißstelle vermieden werden. Die Wärmeübertragung ist gut regelbar. In der genannten Druckschrift wird das bekannte Verfahren in Ausführungsbeispielen erläutert, die sich auf das Stauchen von Kunststoff-Nietköpfen beziehen, bei denen die gezielte und auf die eigentliche Arbeitsposition beschränkte Aufbringung des Heißgases relativ einfach ist. Vorschläge, wie das heiße Gas über längere, ggf. unregelmäßige Schweißlinien gezielt und örtlich begrenzt aufgebracht werden kann, befinden sich in der genannten Druckschrift nicht.

Die DE 100 19 163 A1 zeigt und beschreibt eine Ausströmvorrichtung für das Warmgas-Verschweißen von Kunststoffteilen. Diese Ausströmvorrichtung umfaßt einen Rahmen, der mit einer Warmgas-Zufuhr verbunden ist und auf beiden gegenüberliegenden Seiten Austrittsöffnungen aufweist, aus denen das Warmgas entweichen kann. Das Warmgas dient dazu, korrespondierende Fügeflächen oder Fügelinien von zu verschweißende Kunststoffteilen zu erwärmen und damit verschweißbar zu machen. Es handelt sich somit um ein Heißgas-Verfahren, das im wesentlichen dem oben beschriebenen Verfahren entspricht.

Die US 4,450,038 befaßt sich ebenfalls mit einer Heißluft-Schweißvorrichtung. Die Vorrichtung umfaßt eine Düse mit Düsenöffnungen zum Abgeben von heißer Lust, die in Richtung eines Werkstücks geleitet wird. Die Düse ist so konstruiert, dass sie Luftstöße unterschiedlicher Temperatur oder unterschiedlichen Volumens austreten läßt.

Die JP-A-2001026056 beschreibt ein Verfahren zum Verbinden von Kunstharzteilen durch Anschmelzen der Kontaktflächen und Verschweißen unter Verwendung von Luft.

Der Erfindung liegt die Aufgabe zugrunde, ein Verfahren der eingangs genannten Art sowie eine Vorrichtung zur Durchführung dieses Verfahrens zu schaffen, die eine materialschonende, rasche und zuverlässige Verschweißung von Kunststoffteilen gestatten, ohne daß es zu Oxidationserscheinungen in dem angeschmolzenen Material kommt.

Die gestellte Aufgabe wird erfindungsgemäß durch ein Verfahren gemäß Anspruch 1 und eine Vorrichtung gemäß Anspruch 4 gelöst.

Erfindungsgemäß werden die beiden zu verbindenden Ränder der zu verbindenden Teile durch komplementäre Strahlungskörper erwärmt. Diese komplementären Strahlungskörper befinden sich auf den gegenüberliegenden Seiten einer Heizplatte und sind mit dieser wärmeleitend verbunden.

Die zu verbindenden Kunststoffteile werden von beiden Seiten in die Nähe der Strahlungskörper gebracht, derart, daß die Düsenbohrungsreihe auf die zu erwärmende Schweißlinie der Kunststoffteile gerichtet ist. Die Erwärmung dieser Schweißlinie erfolgt zugleich durch Strahlungswärme des Strahlungskörpers und durch die durch das heiße Gas transportierte Wärme.

Die Düsenbohrungsreihe kann ringförmig geschlossen sein oder durch eine offene Strecke gebildet werden.

Es hat sich gezeigt, daß die Kombination der Strahlungswärme und der heißen Gase zu einer raschen und gleichmäßigen Erwärmung der beiden Schweißlinien führt. Dabei kann das verwendete Gas in erheblich geringeren Mengen und auch bei niedrigeren Temperaturen zugeführt werden, als es beim HeißluftSchweißen der Fall ist. Das heiße Gas führt auf diese Weise zu einer gleichmäßigen Verteilung der Erwärmung und insbesondere auch zu einer Vermeidung lokaler Überhitzungen. Bei Kunststoffen, die bei der Erwärmung leicht oxidieren, wie etwa Polyamid, kann als heißes Gas ein Schutzgas, z.B. Stickstoff oder ein anderes in Inertgas verwendet werden. In anderen Fällen kann unbedenklich erwärmte Luft herangezogen werden.

Die Verwendung eines Schutzgases fördert nicht nur eine gleichmäßige und rasche Durchwärmung der zu verschweißenden Körper. Vielmehr bewirkt das Schutzgas zugleich einen Schutz des Schweißnahtbereiches gegen Oxidation. Geeignete Schutzgase, die in Abhängigkeit von den zu verschweißenden Werkstoffen auszuwählen sind, sind bekannt. Aus Kostengründen wird häufig Stickstoff verwendet. Beim Schweißen mit einem Schutzgas können problemlos Temperaturen oberhalb der üblichen Schweißtemperatur, sogar bis zum zwei- bis vierfachen der Schweißtemperatur eingesetzt werden, ohne daß das zu verschweißende Material oxidiert. Eine derart intensive Erwärmung ermöglicht naturgemäß ein besonders rasches Arbeiten.

Die Fügezonen müssen nicht in einer Ebene liegen, sondern können auch dreidimensional verlaufen. Es ist auch möglich, nicht nur eine Umfangskontur, sondern auch Teile im Inneren der Umfangskontur, beispielsweise Verstärkungsrippen zu verschweißen. Bei der Gestaltung des Verlaufs der Schweißlinie sind verschiedene Formen möglich.

Die Verwendung eines Schutzgases ist insbesondere bedeutsam beim Schweißen von Teilen aus hellen Kunststoffen, da die Oxidation an der Oberfläche der Schweißbereiche andernfalls zu einer Braunverfärbung führen würde.

Im folgenden werden bevorzugte Ausführungsbeispiele anhand der beigefügten Zeichnung näher erläutert.
- Fig. 1: ist eine perspektivische Darstellung eines erfindungsgemäßen Schweißkörpers mit zwei zueinander komplementären, nach oben und unten Wärme abgebenden Strahlungskörpern auf der oberen und unteren Seite sowie einer oberen und einer unteren Halterung für jeweils eines der beiden zu verbindenden Hohlkörperteile;
- Fig. 2: zeigt einen Querschnitt durch den Schweißkörper gemäß Fig. 1;
- Fig. 3: ist eine perspektivische Teildraufsicht auf einen der Strahlungskörper.

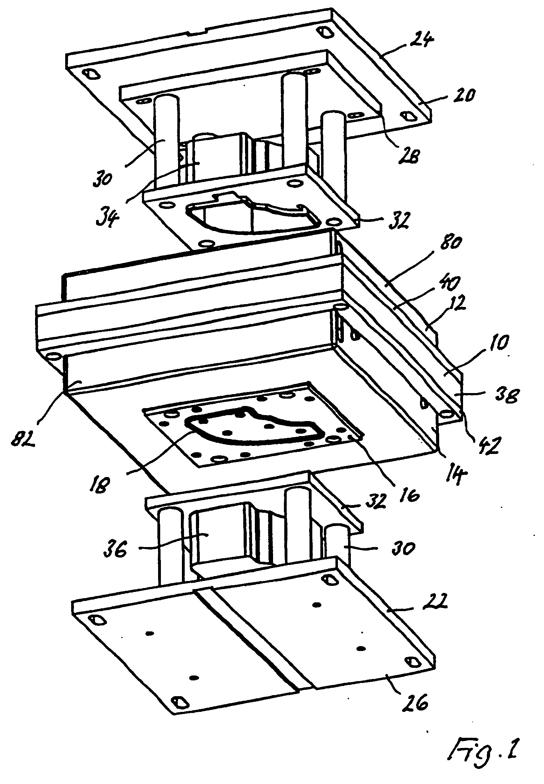

Fig. 1 zeigt im mittleren Bereich einen erfindungsgemäßen Schweißkörper mit einer zentralen, rechteckigen oder quadratischen Heizplatte 10, in die nicht sichtbare elektrische Heizpatronen oder dergleichen eingebettet sind. Auf der oberen und unteren Seite der Heizplatte 10 befinden sich Aufsätze 12 und 14, in die Strahlungskörper 16 eingebettet sind, von denen in Fig. 1 nur der untere Strahlungskörper erkennbar ist.

Im oberen und unteren Strahlungskörper sind Düsenbohrungsreihen vorgesehen, die im oberen und unteren Strahlungskörper kongruent zueinander verlaufen, jedoch insoweit komplementär sein können, als beispielsweise auf der einen Seite die Düsenbohrungsreihe in einer erhabenen Rippe angeordnet ist, wie es in Fig. 1 gezeigt ist, und auf der anderen, hier oberen Seite in einer Nut verläuft.

Unter dem Begriff der Düsenbohrungsreihe soll hier eine dichte Folge von feinen Bohrungen verstanden werden, die in unmittelbarer Folge zueinander angeordnet sind. Es hat sich gezeigt, daß mit Hilfe einer derartigen Düsenbohrungsreihe selbst bei geringen Ansprüchen an die Genauigkeit der Bohrungsdurchmesser eine wesentlich bessere Verteilung des Heißgases über die Länge der Schweißlinie möglich ist, als etwa mit einem Schlitz, selbst wenn dieser mit relativ engen Toleranzen hergestellt worden ist.

Oberhalb und unterhalb des Schweißkörpers befinden sich Halterungen 20, 22, die jeweils eine Grundplatte 24, 26 umfassen, die an einem nicht dargestellten Mechanismus zum Anheben und Absenken der Halterungen 20, 22 befestigt sind. Auf der jeweils dem Schweißkörper zugeordneten Seite der Grundplatte 24, 26 befinden sich Zwischenplatten 28, 30 mit rechteckigem Umriß, an der an den vier Eckbereichen Säulen 30 befestigt sind, die eine Trägerplatte 32 parallel und im Abstand zu den Zwischenplatten 28 und den Grundplatten 24, 26 tragen. In diesen Trägerplatten 32 befinden sich nicht bezeichnete Ausschnitte, die genau an die Form einer Hohlkörper-Hälfte 34, 36 angepaßt sind und die beiden Hohlkörper-Hälften während des Schweißvorganges aufnehmen und halten. Dabei liegen in der dem Schweißkörper zugewandten Ebene der Trägerplatten 32 die Schweißlinien der beiden Hohlkörper-Hälften 34, 36, gegebenenfalls um die Dikke einer Rippe vorspringend oder um die Tiefe einer Nut zurückversetzt.

Die Grundplatten 24 und 26 werden in Richtung des Schweißkörpers abgesenkt und angehoben, so daß die Schweißlinien der Hohlkörper-Hälften 34, 36 bis auf einen geringen Restabstand an die Strahlungskörper 16 angenähert werden. Nunmehr wird die Strahlungswärme der Strahlungskörper 16 auf die Schweißlinien der Hohlkörper-Hälften 34, 36 übertragen, und zugleich tritt ein heißes Gas aus der Düsenbohrungsreihe 18 in Richtung der Schweißlinien der Hohlkörper-Hälften aus.

Durch die kombinierte Wirkung der Wärmestrahlung der Strahlungskörper 16 und des heißen Gases aus den Düsenbohrungsreihen 18 werden die beiden Schweißlinien relativ rasch und intensiv erwärmt, ohne daß es zu den eingangs erläuterten Nachteilen kommt. Anschließend werden die beiden Grundplatten 24 und 26 wieder nach oben bzw. unten auseinandergefahren, und der Schweißkörper wird seitlich in nicht dargestellter Weise herausgefahren. Nunmehr werden die beiden Grundplatten 24, 26 derart nach unten bzw. oben zusammengeführt, daß sich die beiden Schweißlinien der Hohlkörper-Hälften 34, 36 berühren. Auf diese Weise werden die beiden Hohlkörper-Hälften miteinander verschweißt.

Besonders vorteilhaft ist die vorliegende Erfindung, wenn ein Heißgas verwendet wird, das zugleich die Funktion eines Schutzgases hat, wie etwa Stickstoff im Falle von Kunststoffen, die bei der Erwärmung auf Schweißtemperatur Oxidationsspuren aufweisen, beispielsweise Polyamid. In diesem Falle kann die Oxidation durch Verwendung von Stickstoff als Heißgas nahezu vollständig unterdrückt werden.

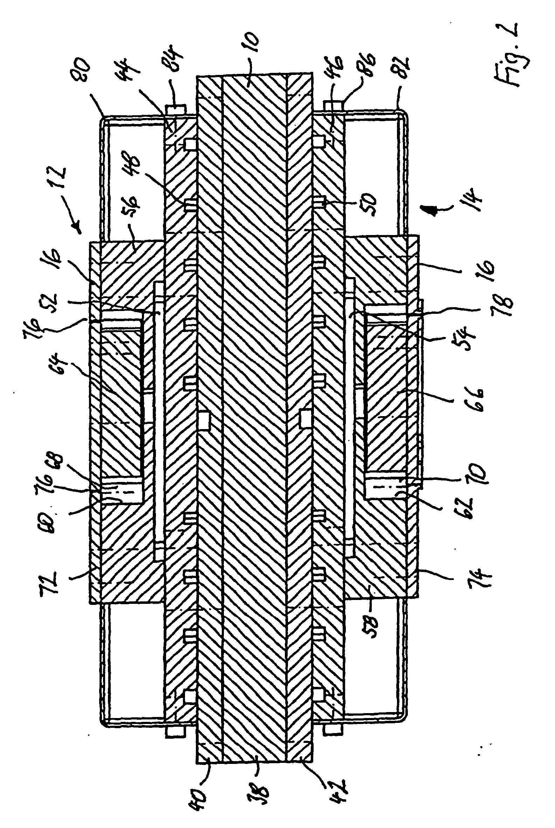

Fig. 2 zeigt den Schweißkörper 10 gemäß Fig. 1 im Querschnitt. Die Heizplatte 10 sitzt als zentrales Heizorgan, die ihrerseits zusammengesetzt ist aus einer mittleren Aufnahmeplatte 38, in der sich Heizelemente, insbesondere Heizdrähte oder Heizpatronen befinden, und zwei äußeren Abdeckplatten 40 und 42. Auf den Außenseiten sind auf beiden Seiten Gasleitplatten 44, 46 befestigt, in denen sich auf der den Abdeckplatten 40, 42 zugewandten Seite ein Labyrinth-System 48, 50 befindet, durch das ein zu erhitzendes Gas zugeführt wird. Vom Labyrinth-System 48, 50 aus verläuft eine nicht dargestellte Verbindung zu einer Zwischenkammer 52, 54 im inneren Boden einer Übertragungsplatte 56, 58 auf der Außenseite der Gasleitplatten 44, 46. Auf der äußeren Seite der Übertragungsplatten 56, 58 befindet sich im mittleren Bereich eine Ausnehmung 60, 62, die teilweise ausgefüllt ist durch einen Einsatz 64, 66, der von Fall zu Fall entsprechend der Form der zu bearbeitenden bzw. zu erwärmenden Schweißlinie an die Form angepaßt ist. Auf dem Umfang der Einsätze 64, 66 befindet sich ein ringförmig geschlossener Gaskanal 68, 70. Die Übertragungsplatten 56, 58 und deren Einsätze 64, 66 sind abgedeckt durch äußere Abdeckplatten 72, 74, in denen sich die Düsenbohrungsreihen 76 und 78 befinden.

Die Übertragungsplatten 56, 58 zusammen mit deren äußeren Abdeckplatten 72, 74 bilden die Strahlungskörper, die sowohl die Wärmestrahlung auf die Werkstücke übertragen als auch heißes Gas auf deren Schweißlinien durch die Düsenbohrungsreihen 76, 78 abgeben.

Die Gasleitplatten 44, 46 und die Übertragungsplatten 56, 58 sind abgedeckt durch eine kastenförmige Haube 80, 82, die eine Aussparung besitzt, aus der die Übertragungsplatten 56, 58 mit deren äußeren Abdeckplatten 72, 74 herausragen. Die Hauben 80, 82 sind mit Hilfe von Schrauben 84, 86 auf dem äußeren Umfang der Gasleitplatten 44, 46 befestigt.

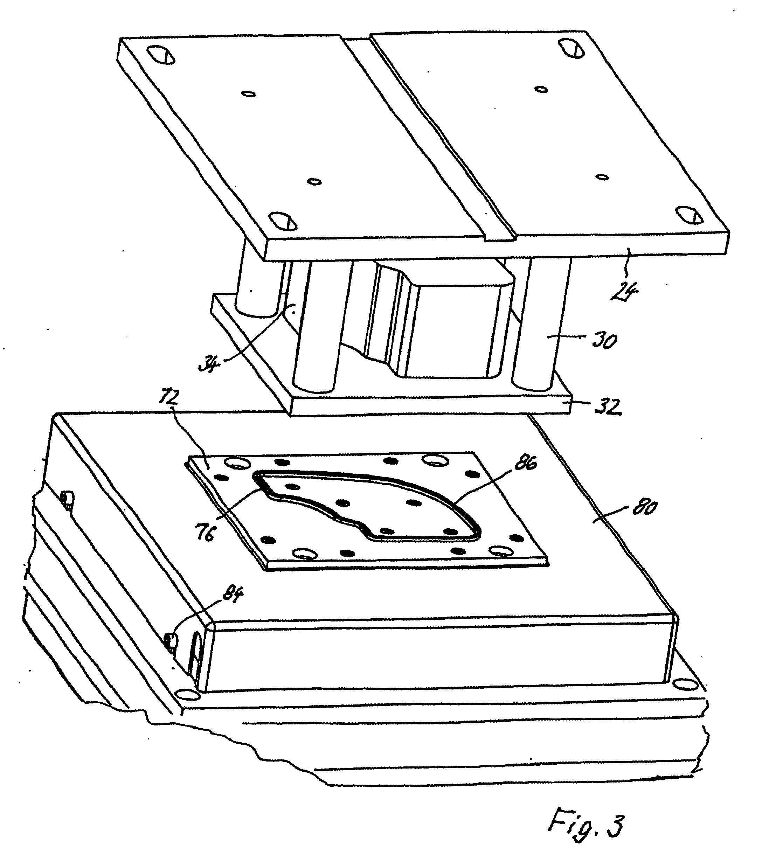

Fig. 3 zeigt eine Teildraufsicht auf die obere Haube 80, mit der aus dieser herausragenden oberen äußeren Abdeckplatte 72. Die Düsenbohrungsreihe 76 befindet sich hier in einem leicht von der Oberfläche der Abdeckplatte 72 vorspringenden Wulst 86. Die entsprechende Schweißlinie der Hohlkörper-Hälfte 34 (Fig. 1) verläuft also in einer Nut.

Wie bereits erwähnt wurde, ist die Erfindung nicht darauf beschränkt, dass die Düsenbohrungsreihen in einer Ebene verlaufen. Vielmehr kann der Verlauf der Düsenbohrungreihen dreidimensional sein. Das eröffnet die Möglichkeit, die Erfindung auch für die Herstellung von Hohlkörpern zu verwenden, die nicht in einer ebenen Trennlinie getrennt sind, sondern deren Trennlinie dreidimensional verläuft.

Die Möglichkeit der Verwendung von Schutzgas für die Erwärmung der zu schweißenden Teile kann genutzt werden, wenn besonders flammgefährdete Kunststoffteile bearbeitet werden, die unter Umständen aufgrund der hohen Temperaturen einer Selbstzündung unterliegen könnten. Eine derartige Selbstzündung kann durch ein Schutzgas wie etwa Stickstoff verhindert werden.

## Patentansprüche

1. Verfahren zum Schweißen von Kunststoffteilen, insbesondere zum Verbinden von Kunststoffteilen entlang einer Schweißlinie, bei dem die zu verbindenden Kunststoffteile mithilfe von beiderseitig einer Heizplatte angeordneten komplementären Strahlungskörpern durch Wärmestrahlung erwärmt und zugleich mit einem heißen Schutzgas beaufschlagt werden und die Kunststoffteile anschließend entlang der Schweißlinie zusammengedrückt werden, **dadurch gekennzeichnet, daß** das heiße Schutzgas durch eine Düsenbohrungsreihe abgegeben wird, die der Schweißlinie folgt.

2. Verfahren zum Schweißen von Kunststoffteilen nach Anspruch 1, **dadurch gekennzeichnet, daß** das heiße Gas Stickstoff ist.

3. Verfahren zum Schweißen von Kunststoffteilen nach Anspruch 1 oder 2, **dadurch gekennzeichnet, daß** die Kunststoffteile in der Schweißlinie über die notwendige Schweißtemperatur erwärmt werden.

4. Vorrichtung zum Schweißen von Kunststoffteilen, insbesondere zum Verbinden von Kunststoffteilen entlang einer Schweißlinie, mit zwei erhitzten. Strahlungswärme abgebenden Strahlungskörpern (16,44,46,56,58,72,74) auf gegenüberliegenden Seiten einer Heizplatte (10); in denen sich ein Gasleitsystem (44,46,48,50) für die Zufuhr und Erwärmung eines heißen Schutzgases befindet, **dadurch gekennzeichnet, daß** die Strahlungskörper (16,44,46,56,58,72,74) äußere Abdeckplatten (72,74) umfassen, in denen sich jeweils eine der Schweißlinie folgende Düsenbohrungsreihe zur Abgabe des heißen Schutzgases aus dem Gasleitsystem auf die Schweißlinie befindet.

5. Vorrichtung zum Schweißen von Kunststoffteilen nach Anspruch 4, **dadurch gekennzeichnet, daß** die Strahlungskörper (16, 44, 46, 56, 58, 72, 74) durch Hauben (80, 82) abgedeckt sind, aus denen nur die äußeren Abdeckplatten (72, 74) austreten.

6. Vorrichtung zum Schweißen von Kunststoffteilen nach Anspruch 4 oder 5, **dadurch gekennzeichnet, daß** die Strahlungskörper (16, 44, 46, 56, 58, 72, 74) eine Übertragungsplatte (56,58) aufweisen, in der sich auf der Außenseite Ausnehmungen (60,62) befinden, in denen austauschbare Einsätze (64,66) liegen und die durch die Abdeckplatten (72,74) abgedeckt sind.

## Claims

1. Method for welding plastics parts, especially for joining plastics parts along a weld line, in which the plastics parts to be joined are heated by thermal radiation with the aid of complementary radiant bodies arranged on both sides of a heating plate and at the same time are acted upon by a hot protective gas, and the plastics parts are then pressed together along the weld line, **characterised in that** the hot protective gas is delivered through a row of nozzle bores which follows the weld line.

2. Method for welding plastics parts according to claim 1, **characterised in that** the hot gas is nitrogen.

3. Method for welding plastics parts according to claim 1 or 2, **characterised in that** the plastics parts are heated to above the necessary welding temperature in the weld line.

4. Device for welding plastics parts, especially for joining plastics parts along a weld line, having on opposing sides of a heating plate (10) two heated radiant bodies (16, 44, 46, 56, 58, 72, 74) which give off radiant heat and in which there is located a gas supply system (44, 46, 48, 50) for the delivery and heating of a hot protective gas, **characterised in that** the radiant bodies (16, 44, 46, 56, 58, 72, 74) comprise outer cover plates (72, 74) in each of which there is located a row of nozzle bores, following the weld line, for delivering the hot protective gas from the gas supply system to the weld line.

5. Device for welding plastics parts according to claim 4, **characterised in that** the radiant bodies (16, 44, 46, 56, 58, 72, 74) are covered by caps (80, 82) from which only the outer cover plates (72, 74) emerge.

6. Device for welding plastics parts according to claim 4 or 5, **characterised in that** the radiant bodies (16, 44, 46, 56, 58, 72, 74) have a transmission plate (56, 58) in which there are located, on the outside, recesses (60, 62) in which interchangeable inserts (64, 66) are located and which are covered by the cover plates (72, 74).

## Revendications

1. Procédé de soudure d'éléments en matière plastique, en particulier pour relier des éléments en matière plastique le long d'une ligne de soudure, dans lequel les éléments en matière plastique à relier sont chauffés par rayonnement thermique à l'aide de corps rayonnants complémentaires agencés des deux côtés d'une plaque chauffante et conjointement, alimentés en gaz de protection chaud, les éléments en matière plastique étant ensuite pressés le long de la ligne de soudure, **caractérisé en ce que** le gaz de protection chaud est diffusé à travers une rangée de trous de buse qui suit la ligne de soudure.

2. Procédé de soudure d'éléments en matière plastique selon la revendication 1, **caractérisé en ce que** le gaz chaud est de l'azote.

3. Procédé de soudure d'éléments en matière plastique selon la revendication 1 ou 2, **caractérisé en ce que** les éléments en matière plastique sont chauffés dans la ligne de soudure par la température de soudage nécessaire.

4. Dispositif de soudure d'éléments en matière plastique, en particulier pour relier des éléments en matière plastique le long d'une ligne de soudure, avec deux corps rayonnants (16, 44, 46, 56, 58, 72, 74) chauffés, émettant une chaleur rayonnante sur les deux côtés opposés d'une plaque chauffante (10) dans lesquels se trouve un système d'alimentation en gaz (44, 46, 48, 50) pour amener et chauffer un gaz de protection chaud, **caractérisé en ce que** les corps rayonnants (16, 44, 46, 56, 58, 72, 74) comprennent des plaques d'obturation extérieures (72, 74), dans chacune d'elles se trouvant l'une des rangées de trous de buse suivant la ligne de soudure, pour l'émission du gaz de protection chaud à partir du système d'alimentation en gaz.

5. Dispositif de soudure d'éléments en matière plastique selon la revendication 4, **caractérisé en ce que** les corps rayonnants (16, 44, 46, 56, 58, 72, 74) sont recouverts de capots (80, 82) laissant passer uniquement les plaques d'obturation extérieures (72, 74).

6. Dispositif de soudure d'éléments en matière plastique selon la revendication 4 ou 5, **caractérisé en ce que** les corps rayonnants (16, 44, 46, 56, 58, 72, 74) comportent une plaque de transmission (56, 58) dans laquelle se trouvent sur la partie extérieure, des évidements (60, 62) dans lesquels sont disposées des pièces remplaçables (64, 66) et qui sont recouverts de plaques d'obturation (72, 74).
